# EUROPÄISCHE PATENTSCHRIFT

(11) **EP 2 026 903 B1**
(45) Veröffentlichungstag und Bekanntmachung des Hinweises auf die Patenterteilung: **23.12.2009**
(21) Anmeldenummer: 07725717.8
(22) Anmeldetag: 31.05.2007
(51) Int. Cl.: B01J 19/18, B01F 7/04, B01F 15/06, C08G 63/78

(54) **ENDREAKTOR**
END REACTOR
RÉACTEUR FINAL

(30) Priorität: 02.06.2006 DE 102006025943
(43) Veröffentlichungstag der Anmeldung: 25.02.2009
(73) Patentinhaber: Uhde Inventa-Fischer GmbH, 13509 Berlin (DE)
(72) Erfinder: SCHULZ VAN ENDERT, Eike, 13467 Berlin (DE)
(74) Vertreter: Pfenning, Meinig & Partner GbR
(86) Internationale Anmeldenummer: PCT/EP2007/004836
(87) Internationale Veröffentlichungsnummer: WO 2007/140926

(56) Entgegenhaltungen:
- EP-A1- 0 320 586
- EP-A1- 1 253 163
- WO-A-94/20652
- WO-A-2006/050799
- DE-A1- 4 447 422
- US-A- 3 563 710
- US-A- 3 684 458

## Beschreibung

Die Erfindung betrifft eine Reaktorvorrichtung für fließfähige Medien, insbesondere für Polymere zur Polykondensation von Polyestern, nach dem Oberbegriff des Hauptanspruchs.

Aus der DE 44 47 422 A1 ist eine derartige Vorrichtung bekannt. Diese Reaktorvorrichtung besteht aus einem einen Ein- und Auslass aufweisenden Reaktorgehäuse und einem darin drehenden Rotor, der über eine Lagervorrichtung mit vakuumdichten Abdichtungen mittels über die Stirnwände des Reaktorgehäuses herausreichenden Stummelwellen-Anordnungen horizontal gelagert ist, wobei am Rotor ringförmige Förderelemente vorgesehen sind. Der Rotor besteht dabei aus einem mit Durchbrechungen versehenen Hohlzylinder (Korblochzarge), auf dem dann die ringförmigen Elemente befestigt sind.

Reaktorvorrichtungen wie vorstehend beschrieben, werden insbesondere zur Polykondensation von viskosen Monomeren und/oder Präpolymeren eingesetzt. Es hat sich nun aber gezeigt, dass mit einer derartigen Reaktorvorrichtung es nicht möglich ist, hochviskose Polymerprodukte mit einfachen Mitteln zu günstigen Anlagekosten herzustellen und gleichzeitig eine verbesserte Qualität der Endprodukte gegenüber den bekannten Systemen zu erreichen.

Ähnliche Vorrichtungen sind auch aus WO2006/050799, EP 0 320 586, US 3 563 710 und WO 94/20652 bekannt.

Ausgehend hiervon ist es deshalb die Aufgabe der vorliegenden Erfindung, eine Reaktorvorrichtung für fließfähige Medien, insbesondere für Polymere zur Polykondensation von Polyestern anzugeben, mit der es möglich ist, auf einfache Weise hochviskose Polymerprodukte mit einer herausragenden Qualität sowie einem definierten Verweilzeitspektrum im Reaktor unter gleichzeitiger Realisierung eines hohen Molekulargewichts herzustellen. Der Reaktor kann im gesamten Unterdruck- und Oberdruckbereich sowie mit Temperaturen bis 350 °C betrieben werden.

Diese Aufgabe wird erfindungsgemäß durch die kennzeichnenden Merkmale des Hauptanspruchs in Verbindung mit den Merkmalen des Oberbegriffs gelöst. Die Unteransprüche zeigen vorteilhafte Weiterbildungen auf.

Erfindungsgemäß ist somit vorgesehen, dass der zylinderförmige Rotor selbst einen mindestens teilweise beheizbaren oder kühlbaren Abschnitt aufweist. Durch die Ausbildung eines mindestens teilweise beheizten oder gekühlten Abschnitts des zylinderförmigen Rotors wird erreicht, dass auch hochviskose Polymerprodukte verarbeitet werden können, ohne dass sog. "dead spots" entstehen, die zu höchstviskosen und hochkristallinen Ablagerungen führen könnten, die die Qualität des Endprodukts mindern würden.

Die Beheizung oder Kühlung des Rotors kann dabei so ausgebildet sein, dass der Rotor vollständig beheizt oder gekühlt ist, oder aber dass der Rotor in zwei Abschnitte aufgeteilt ist, und zwar einen unbeheizten und einen auslassseitig angeordneten beheizbaren/kühlbaren Abschnitt. Der beheizbare/kühlbare Abschnitt ist dabei so ausgelegt, dass er im Wesentlichen den hochviskosen Bereich abdeckt, und der unbeheizte Abschnitt den niedrigviskosen Bereich. Je nach Polymer können deshalb ein bis zwei Drittel des horizontal angeordneten Rotors durch den auslassseitig angeordneten beheizten Abschnitt gebildet sein.

Für den Fall, dass ein durchgehend beheizter/gekühlter Rotor vorgesehen ist, ist es günstig, wenn durch geeignete Maßnahmen ein entsprechendes Temperaturgefälle ausgehend von einer niedrigen Temperatur am Einlass, d.h. im niedrigen viskosen Bereich, bis zu einer höheren Temperatur im hochviskosen Bereich am Auslass hergestellt wird.

Die Reaktorvorrichtung ist so aufgebaut, dass sie einen unbeheizten und einen auslassseitigen beheizbaren/kühlbaren Abschnitt aufweist. Der beheizbare/kühlbare Abschnitt befindet sich im hochviskosen Bereich und kann ein bis zwei Drittel des gesamten horizontalen Reaktors in Bezug auf die horizontale Ausdehnung umfassen.

Beim erfindungsgemäßen Reaktor ist der unbeheizte Abschnitt durch eine Korblochzarge und der beheizbare/kühlbare Abschnitt durch eine geschlossene Zarge gebildet. Die im hochviskosen Bereich vorgesehene geschlossene Zarge ist zudem bevorzugt mit einer Beheizung versehen, die als Doppelmantel für Wärmeträgeröle oder elektrische Strahlungsheizung ausgeführt sein kann. Der Übergang von der gelochten zur ungelochten Korbzarge wird als langer Konus ausgeführt, der den Übergang von dem mittelviskosen Sumpf - zur hochviskosen fast sumpflosen Fahrweise kennzeichnet.

Die Beheizung/Kühlung der Korbzarge bei Wahl eines flüssigen Wärmeträgers erfolgt durch die Antriebswelle mittels einer Durchführung, die innerhalb derselben mit einer Isolierung umhüllt ist. Dies vermeidet die unerwünschte Wärmeübertragung auf Lager und Abdichtungen des Rührorgans. Der Antrieb selbst wird als Aufsteckgetriebe mit Drehmomentstütze ausgeführt.

Das Verhältnis von Lochzargendurchmesser zum Reaktionsraumdurchmesser beträgt erfindungsgemäß zwischen 0,5 und 0,6 und das Verhältnis der geschlossenen Zarge zum Reaktionsraum 0,65 bis 0,75. Es hat sich weiterhin als günstig erwiesen, wenn das L/D-Verhältnis (Längenverhältnis L zum Durchmesserverhältnis D) des Reaktionsraumes 1 bis 3,5, bevorzugt 1,5 bis 3,0, besonders bevorzugt 2,5 bis 3 beträgt.

Ein weiteres Kennzeichen der vorliegenden Erfindung besteht darin, dass die ringförmigen Filmbildungselemente als rohrförmiger Kranz ausgebildet sind, wobei zwischen dem rohrförmigen Kranz und der Rotoroberfläche eine netzartige metallische Rohrstruktur mit unterschiedlicher Geometrie aufgespannt ist. Es hat sich gezeigt, dass entgegen der bisherigen Erfahrung der Aufbau der Oberflächen bildenden Ringe bei hochviskosem Polymer aus Rechteckprofilen und Speichen mit runden oder vieleckigen (z.B. Sechseck) Öffnungen eine nicht bevorzugte Lösung darstellen. Vielmehr zeigt sich, dass runde Querschnitte (Rohre) für die Tragkonstruktion die Aufnahme von Polymer und die Schlieren- und Filmbildung begünstigen, wobei die Rohrkonstruktion dreieckige und/oder rautenförmige Öffnungen freigibt, in denen der Verzug zur Filmausbildung stattfindet. Hierbei können die Öffnungen auf rohrförmigen Evolventen, die den Verbund zur Korbzarge herstellen, angeordnet sein, die dafür sorgen, dass aufgrund der Drehbewegung des Korbes stets eine Vergrößerung der Filmfläche erfolgt. Diese Anordnung hat auch den Vorteil, dass eine schonende Scherung (Ziehschnitt) an den Abstreifern stattfindet, wodurch der Energieeintrag erheblich reduziert wird.

Vorteilhaft ist ferner, dass sich auf den Rohrringen im Gegensatz zu rechteckigen Profilen keine stationären, horizontalen Flächen bilden, auf denen das Polymer länger verharren kann, wodurch es zu Qualitätsverschlechterungen kommen würde. An runden Querschnitten umschlingt das Polymer bei der Bildung von Filmen den Querschnitt so, dass die Gravitation an der Masse wirksam wird. Dadurch kommt es zu einem fortwährenden Masseaustausch und stetiger Ausbildung von besonders dünnen und stabilen Produktfilmen, die zu einer schnellen Ausdampfung von leichtflüssigen Reaktanden bzw. Lösungsmitteln führen.

Die rohrförmigen Filmbildungselemente sind dabei senkrecht zur Behälterachse auf dem Rotor angeordnet.

Wie im Stand der Technik schon bekannt, ist zwischen jedem rohrförmigen Filmbildungselementpaar ein Abstreifer vorgesehen. Bevorzugt ist es bei der erfindungsgemäßen Reaktorvorrichtung jedoch, wenn im Bereich des unbeheizten Abschnitts, d.h. im Bereich der Korblochzarge, Abstreifer (Statoren) und im Bereich des beheizten/gekühlten Abschnitts, d.h. im Bereich der geschlossenen Zarge, sog. Förderabstreifer und Gegenabstreifer vorgesehen sind. Der Zweck der Abstreifer/Förderabstreifer und Gegenabstreifer besteht darin, dass die durch den rohrförmigen Kranz aus dem Sumpf herausgezogene Polymermasse auf denselben begrenzt wird und es gleichzeitig vermieden wird, dass geschlossene Polymerbrücken im Zwischenraum entstehen. Bevorzugt ist deshalb eine Anordnung der Abstreifer tangential zur Unterkante des Korbes. Ein weiterer Zweck der Abstreifer/Förderabstreifer und Gegenabstreifer besteht darin, dass die sich auf der geschlossenen Zarge bildenden Wülste durch den rohrförmigen Kranz durch Schieben und von der glatten Korbzargenwand aus fließende Polymerwülste dünnschichtig austauschen, wobei die Masse im Sumpf gesammelt wird.

Die zwischen jedem Filmbildungselementpaar angeordneten Förderabstreifer und die auf der Gegenseite der Zarge angeordneten Abstreifer sorgen gleichzeitig dafür, dass die Wülste und Polymermasse, die sich auf dem Zwischenraum zwischen zwei rohrförmigen Kränzen ansammeln, durch die in Fließrichtung nächste Scheibe geschoben werden und dabei eine Selbstreinigung der Rohrringe an den Verbindungspunkten zur Zarge und gleichzeitig eine Wiederbeladung derselben bewirkt. Die Abstreifer sind in Form von Dreiecksquerschnitten mit unterschiedlicher Anstellung einer Seite zur Horizontalen ausgeführt. Hierdurch wird die Förderwirkung erzeugt.

Ein weiteres Kennzeichen der erfindungsgemäßen Reaktorvorrichtung besteht darin, dass die beheizbare/kühlbare Korbzarge mit geringem Abstand bis zum Reaktorenddeckel geführt wird. An der Peripherie der Korbzarge wird ein federndes umlaufendes Lamellen-Abstreifelement angeordnet, das die Verschmutzung des Enddeckels vermeidet. Der Zwischenraum kann dabei mit einem Inertgas gespült werden.

Im Bereich am Austrag ist zusätzlich bevorzugt ein mondsichelförmiger Verdränger angeordnet, der einen totraumfreien Übergang zur Pumpen-Saugöffnung gewährleistet und der dem Polymersumpf folgend in einem bestimmten Winkel angestellt wird. Zur optimalen Schlussentgasung des Polymers sind vor dem Verdränger eine oder mehrere ringförmige Filmbildungselemente vorgesehen, die in Zusammenhang mit rückfördernden Abstreifern ebenfalls eine Zuführung des Polymers zur Pumpe gewährleisten.

Bei der erfindungsgemäßen Reaktorvorrichtung ist weiterhin hervorzuheben, dass es günstig ist, wenn der Polymerauslassstutzen rechteckig ausgeführt ist, wobei die längeren Seiten rechtwinklig zur Behälterachse angeordnet sind, sodass von den Abstreifern zugeführtes Produkt eine optimale Füllung der Austragszahnradpumpe bewirkt. Der Polymerauslassstutzen ist bevorzugt ein rechteckiger Blockflansch, der in der Behälterwand einen Verbund mit dessen Heizmantel bildet, der nicht in üblicher Weise senkrecht zur Mittelachse des Behälters, sondern parallel verschoben in Drehrichtung des Korbes angeordnet ist. Hierdurch wird die stetige, vollständige Füllung der Zahnrandpumpe weiterhin gewährleistet.

Bei der erfindungsgemäßen Reaktorvorrichtung ist weiterhin auch die Anordnung des Gasvakuumrohrs (Brüdenstutzen) an einer Längsposition des Reaktors im oberen Bereich vorteilhaft. Als besonders günstig hat sich die Anordnung des Rohres kurz vor der Hochviskoszone gezeigt, z.B. nach etwa 60 % der Reaktorlänge. Zur Vermeidung von Wirbeln des Gasstromes an der Übergangsstelle zum Rohr ist eine Übergangsreduzierung im Querschnittsverhältnis 2 bis 3:1 bevorzugt, wobei eine Neigung von der oberen Behältermittelinie von 10° bis 30° in Drehrichtung des Korbes besonders günstig ist. Es kann auch ein weiteres Brüdenrohr im 1. Drittel des Gehäuses vorgesehen werden, um die Hauptmasse des Lösungsmittels oder Reaktionsgases vorteilhaft vor dem Hochviskosteil des Reaktors zu entfernen.

Die Erfindung betrifft weiterhin die Verwendung der vorstehend beschriebenen Vorrichtung zur Polykondensation von Polymeren, bevorzugt von Polyestern. Die erfindungsgemäße Vorrichtung kann weiterhin bevorzugt als sog. Endreaktor in Polykondensationsprozessen eingesetzt werden.

Die Erfindung wird nachfolgend anhand der Figuren 1 bis 4 näher erläutert, ohne jedoch den Gegenstand der vorliegenden Erfindung einzuschränken. Hierbei zeigen:
Figur 1 einen Längsschnitt durch eine erfindungsgemäße Reaktorvorrichtung;
Figur 2 einen Querschnitt durch die Reaktorvorrichtung;
Figur 3 die Ausbildung der ringförmigen Filmbildungselemente und
Figur 4 eine Teilansicht der Enddeckel-Konstruktion.

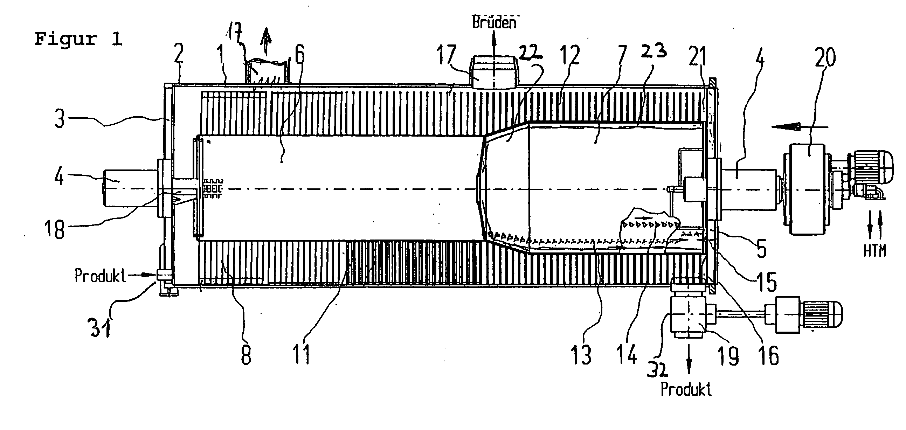

Figur 1 zeigt im Längsschnitt eine Ausführungsform einer erfindungsgemäßen Reaktorvorrichtung 25. Die Reaktorvorrichtung 25 besteht aus einem Reaktorgehäuse 1, das einen beheizten Doppelmantel 2 aufweist. Das Reaktorgehäuse ist einlassseitig mit einem Deckel mit Heizmantel 3 und auslassseitig mit einem Enddeckel 5 mit Schweißlippe versehen. In dem Reaktor 25 sind dabei über Lagervorrichtungen mit vakuumdichter Abdichtung 4 mittels über die die Deckel 3, 5 bildenden Stirnwände des Reaktorgehäuses 1 herausreichende Stummelwellen-Anordnungen, ein drehender Rotor horizontal gelagert. Bei der Ausführungsform nach der Figur 1 ist dabei der horizontal gelagerte drehende Rotor durch eine gelochte Rührkorbzarge 6 und eine geschlossene beheizte Rührkorbzarge 7 gebildet, wobei der Übergang von der gelochten zur ungelochten Korbzarge als langer Konus 22 ausgeführt ist. Der Vorteil der erfindungsgemäßen Ausbildung des Rotors in form eines beheizten Abschnittes als geschlossene Zarge 7 und des unbeheizten Abschnittes als Korblochzarge 6 besteht nun darin, dass in einem Reaktor die Herstellung von sehr hochviskosen Polymerprodukten mit hohen Molekulargewichten; z.B. Polyester mit ausgezeichneter Reinheit, realisiert werden können. Durch den Übergang von der gelochten zur ungelochten Korbzarge in Form eines langen Konuses 22 wird der Übergang von dem mittelviskosen Sumpf zur hochviskosen, fast sumpflosen Fahrweise begünstigt.

Die Beheizung der geschlossenen Rührkorbzarge 7 wird gemäß dem Ausführungsbeispiel nach Figur 1 durch einen Doppelmantel 23 realisiert.

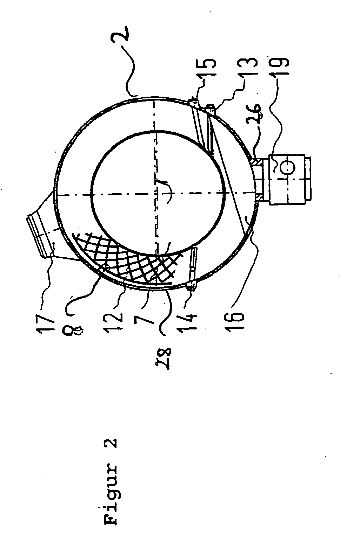

Die ringförmigen Filmbildungselemente 8, die auf dem drehbaren Rotor 6, 7 befestigt sind, sind durch einen rohrförmigen Kranz 28 und einer zwischen dem rohrförmigen Kranz 28 und der Rotoroberfläche aufgespannten netzartigen metallischen Rohrstruktur 12 gebildet. Die genaue Ausgestaltung der ringförmigen Filmbildungselemente 8 ist in Figur 2 gezeigt.

Ein weiteres Kennzeichen der erfindungsgemäßen Reaktorvorrichtung 25 besteht nun darin, dass zwischen jedem ringförmigen Filmbildungselementpaar Abstreifer, Förderabstreifer und/oder Gegenabstreifer 11, 13, 14, 15 angeordnet sind. Im Beispielsfall der Ausführungsform nach Figur 1 sind im Bereich des unbeheizten Abschnittes 6, d.h. im Bereich der gelochten Rührkorbzarge, die im Wesentlichen durch den niedrigviskosen Bereich definiert ist, Messerabstreifer 11 vorgesehen. Im Bereich des beheizten Abschnittes, der im Wesentlichen durch hochviskosen Betrieb definiert ist, sind Förderabstreifer 13 mit einem Dreiecksprofil und/oder Tragflügelprofil und Gegenabstreifer 14, die ebenfalls ein Dreiecksprofil aufweisen, vorgesehen. Durch diese spezifische Ausbildung der unterschiedlichen Anordnung und Gestaltung der Abstreifer, Förderabstreifer und/oder Gegenabstreifer 11, 13, 14, 15 wird eine nahezu optimale Filmbildung und Selbstreinigung erreicht. Zur weiteren Unterstützung einer optimalen Filmbildung ist es bei der Ausführungsform der Reaktorvorrichtung 25 nach Figur 1 gleichfalls noch vorgesehen, dass einlassseitig ein Wellenstummelabstreifer 18 vorgesehen ist und auslassseitig federnde Lamellen 21. Bei der erfindungsgemäßen Reaktorvorrichtung 25 ist weiterhin zu betonen, dass durch die Anordnung der ringförmigen Filmbildungselemente 8 bis zum Enddeckel 5 eine optimale Entgasung erreicht werden kann. Damit sind Polymerendprodukte realisierbar, die niedrige Gehalte an unerwünschten Nebenprodukten aufweisen sowie insbesondere niedrige Acetaldehydgehalte im Falle von Polyestern. Die Abführung der entstehenden Gase erfolgt bei der Reaktorvorrichtung 25 über mindestens einen Brüdenstutzen 17, bevorzugt aber, wie es in Figur 1 gezeigt ist, über zwei Brüdenstutzen 17. Als weiteres Kennzeichen der erfindungsgemäßen Reaktorvorrichtung 25 ist zu nennen, dass die Austragspumpe 19 direkt in das Reaktorgehäuse 1 integriert ist. Der der Austragspumpe 19 zugeordnete Polymerauslassstutzen ist dabei bevorzugt ein rechteckiger Blockflansch, der direkt in den Heizmantel 2 integriert ist, wobei dies nicht wie üblicherweise senkrecht zur Mittelachse des Behälters erfolgt ist, sondern parallel verschoben in Drehrichtung des Korbes (siehe auch Figur 2). Dadurch wird ein möglichst vollständiges Absaugen des Produktes erreicht, da sich dieses jeweils immer in Drehrichtung außerhalb der Horizontalen des Korbes ansammelt. Zur weiteren Unterstützung ist bei der erfindungsgemäßen Reaktorvorrichtung am Enddeckel noch zusätzlich ein Enddeckelverdränger 16 vorgesehen, sodass eine optimale Zufuhr des hochviskosen Polymers in die Austragspumpe 19 erfolgen kann und Totraum vermieden wird. In Figur 1 ist dabei das Antriebsgetriebe bzw. der Motor für den im Gehäuse 2 angeordneten horizontalen Korb mit 20 bezeichnet.

In Figur 2 ist nun ein Querschnitt des in der Figur 1 beschriebenen Reaktors 25 gezeigt. Aus Figur 2 geht insbesondere die parallele Verschiebung, in Drehrichtung, der Austragspumpe 19 hervor und die Einbindung eines rechteckigen Blockflansches 26 in das Gehäuse 1. Aus Figur 2 geht weiterhin die Anordnung der Förderabstreifer 13 sowie Gegenabstreifer 14 jeweils mit Dreiecksprofil hervor. Mit 15 sind die Förderabstreifer im Gegenstrom bezeichnet. Figur 2 zeigt gleichfalls ausschnittsweise die Anordnung des ringförmigen Filmbildungselementes 8 auf der geschlossenen beheizten Rührkorbzarge 7. Das ringförmige Filmbildungselement 8 besteht dabei aus einem rohrförmigen Kranz 28 sowie Rohrringen mit Rohrevolventen und Rauten 12. Mit 17 ist wiederum wie in Figur 1 das Brüden- bzw. Vakuumrohr dargestellt, das Bezugszeichen 16 bezeichnet den Enddeckel-Verdränger.

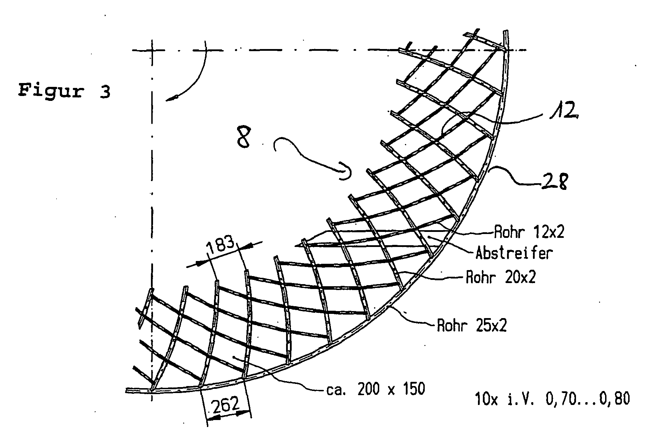

Aus Figur 3 ist nun der genaue Aufbau der ringförmigen Filmbildungselemente 8 gezeigt. In Figur 3 ist dabei das Filmbildungselement 8 ausschnittsweise ohne den Rotor dargestellt. Das ringförmige Filmbildungselement 8 besteht dabei aus einem rohrförmigen Kranz 28 sowie Rohrringen mit Rohrevolventen und Rauten 12. Es hat sich gezeigt, dass insbesondere runde Querschnitte, wie Rohre, für die Tragkonstruktion die Aufnahme von Polymer und die Schlieren- und Filmbildung begünstigen, wobei die Rohrkonstruktion, wie in Figur 3 erkenntlich, dreieckige bzw. rautenförmige Öffnungen freigibt, in denen der Verzug zur Filmbildung stattfindet. Hierbei können die Öffnungen auf rohrförmigen Evolventen, die den Verbund zur Korbzarge herstellen, angeordnet sein, die dafür sorgen, dass aufgrund der Drehbewegung des Korbes stets eine Vergrößerung der Filmfläche erfolgt. Diese Anordnung hat auch den Vorteil, dass eine schonende Scherung (Ziehschnitt) an den Abstreifern stattfindet, wodurch der Energieeintrag erheblich reduziert wird. Aus Figur 3 sind weiterhin noch die entsprechenden Abmessungen der Rohre sowie der Evolventen und dreiecksförmigen Ausschnitte gezeigt. Die Abmessungen der Evolventen bzw. Rauten wird in Abhängigkeit des herzustellenden Polymers und dessen Viskosität gewählt. Bei hochviskosen Polymeren wird eine entsprechende Vergrößerung gewählt, wohingegen bei niedrigviskosen Produkten die in Figur 3 gezeigten Abmessungen günstig sind.

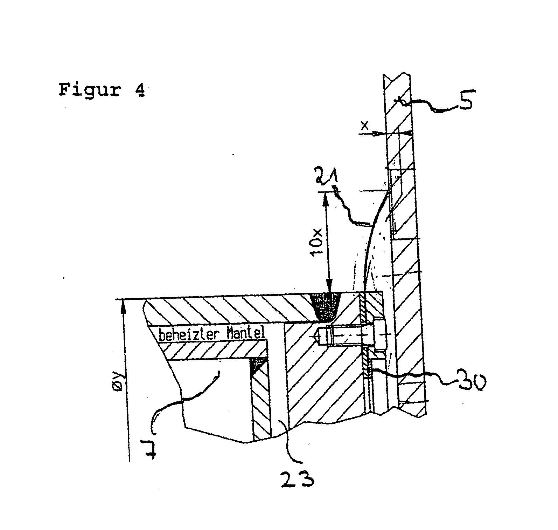

Figur 4 zeigt nun noch in vergrößerter Darstellung einen Ausschnitt aus der Enddeckelkonstruktion 5 der erfindungsgemäßen Reaktorvorrichtung 25 nach Figur 1. Wie aus Figur 4 hervorgeht, weist die Ausführungsform nach Figur 1 einen federnden Abstreifer 21 auf, der mit dem beheizten Mantel 23 der geschlossenen Korbzarge 7 z.B. über Schrauben befestigt ist, zusätzlich kann noch eine Punktverschweißung 30 vorhanden sein. Der federnde Abstreifer 21, der in Form von Lamellen ausgebildet ist, sorgt dafür, dass eine Verschmutzung des Enddeckels mit Produkt verhindert wird. Ergänzend ist noch vorgesehen, dass der durch den federnden Abstreifer 21 und durch den Enddeckel 5 begrenzte Raum mittels Inertgas gespült werden kann.

## Patentansprüche

1. Reaktorvorrichtung (25) für fließfähige Medien insbesondere für Polymere zur Polykondensation von Polyestern mit einem in einem, einen Ein- und Auslass (31, 32) aufweisenden Reaktorgehäuse (1), drehenden Rotor, der über eine Lagervorrichtung (4) mittels über die Stirnwände des Reaktorgehäuses (1) herausreichende Stummelwellen-anordnungen horizontal gelagert ist und dass am Rotor ringförmige Filmbildungselemente (8) und zwischen den ringförmigen Filmbildungselementen (8) an den Innenflächen des Reaktorgehäuses Abstreifer angeordnet sind,
**dadurch gekennzeichnet, dass** der zylinderförmige Rotor einen mindestens teilweise beheizbaren/kühlbaren Abschnitt aufweist, wobei in Richtung des Auslasses (32) ein beheizbarer/kühlbarer Abschnitt und in Richtung des Einlasses (31) ein unbeheizter Abschnitt vorgesehen sind und der unbeheizte Abschnitt des zylinderförmigen Rotors als Korblochzarge (6) und der beheizbare/kühlbare Abschnitt als geschlossene Zarge (7) ausgebildet ist.

2. Reaktorvorrichtung nach Anspruch 1,
**dadurch gekennzeichnet, dass** das Verhältnis von Lochzargendurchmesser zum Reaktionsraumdurchmesser zwischen 0,5 und 0,6 und das Verhältnis der geschlossenen Zarge zum Reaktionsraum 0,65 bis 0,75 beträgt.

3. Reaktorvorrichtung nach Anspruch 1 oder 2,
**dadurch gekennzeichnet**, das das L/D-Verhältnis (Längenverhältnis (L) zum Durchmesserverhältnis (D)) des Reaktionsraumes 1 bis 3,5, bevorzugt 1,5 bis 3,0, besonders bevorzugt 2,5 bis 3, beträgt.

4. Reaktorvorrichtung nach mindestens einem der Ansprüche 1 bis 3,
**dadurch gekennzeichnet, dass** die geschlossene Zarge (7) einen beheizbaren/kühlbaren Doppelmantel (23) aufweist.

5. Reaktorvorrichtung nach mindestens einem der Ansprüche 1 bis 4,
**dadurch gekennzeichnet, dass** der Übergang von der Korblochzarge (6) zur geschlossenen Zarge (7) als Konus (22) ausgeführt ist.

6. Reaktorvorrichtung nach mindestens einem der Ansprüche 1 bis 5,
**dadurch gekennzeichnet, dass** in Bezug auf die horizontale Ausdehnung, ein bis zwei Drittel des horizontal angeordneten Rotors, durch den auslassseitig angeordneten beheizbaren/kühlbaren Abschnitt gebildet sind.

7. Reaktorvorrichtung nach mindestens einem der Ansprüche 1 bis 6,
**dadurch gekennzeichnet, dass** nur im unbeheizten Abschnitt die Abstreifer (11) und im beheizbaren/kühlbaren Abschnitt Förderabstreifer (13) angeordnet sind.

8. Reaktorvorrichtung nach Anspruch 7,
**dadurch gekennzeichnet, dass** die Förderabstreifer (13) zu den im Bereich des unbeheizten Abschnittes angeordneten Abstreifern (11) radial versetzt angeordnet sind.

9. Reaktorvorrichtung nach Anspruch 7 oder 8,
**dadurch gekennzeichnet, dass** im Bereich des beheizbaren/kühlbaren Abschnitts zu dem Förderabstreifer (13) entgegensetzt Gegenabstreifer (14) vorgesehen sind.

10. Reaktorvarrichtung nach mindestens einem der Ansprüche 7 bis 9,
**dadurch gekennzeichnet, dass** die Förderabstreifer (13) und/oder die Gegenabstreifer (14) dreiecksförmig ausgebildet sind.

11. Reaktorvorrichtung nach mindestens einem der Ansprüche 1 bis 10,
**dadurch gekennzeichnet, dass** die ringförmigen Filmbildungselemente (8) durch einen rohrförmigen Kranz (28) und einer zwischen dem rohrförmigen Kranz (28) und der Rotoroberfläche aufgespannten netzartigen metallische Rohrstruktur (12) gebildet ist.

12. Reaktorvorrichtung nach Anspruch 11,
**dadurch gekennzeichnet, dass** die netzartige metallische Struktur rauten- und/oder dreieckförmige Öffnungen bildet.

13. Reaktorvorrichtung nach mindestens einem der Ansprüche 1 bis 11,
**dadurch gekennzeichnet, dass** die Austragspumpe (19) unmittelbar am Reaktorgehäuse (1) angeordnet ist.

14. Reaktorvorrichtung nach mindestens einem der Ansprüche 1 bis 13,
**dadurch gekennzeichnet, dass** das Reaktorgehäuse (1) einen beheizbaren Doppelmantel (2) aufweist.

15. Reaktorvorrichtung nach mindestens einem der Ansprüche 1 bis 14,
**dadurch gekennzeichnet, dass** am auslassseitigen Ende der geschlossenen Zarge (7) ein EnddeckelVerdränger (16) vorgesehen ist.

16. Reaktorvorrichtung nach mindestens einem der Ansprüche 1 bis 15,
**dadurch gekennzeichnet, dass** bei der zwischen dem Gehäuseenddeckel (5) und der beheizbaren/kühlbaren Korbzarge (7) eine aus federnden Lamellen bestehende Abdichtung (21) mit Inertgasspülung vorgesehen ist.

17. Reaktorvorrichtung nach mindestens einem der Ansprüche 1 bis 16,
**dadurch gekennzeichnet, dass** für die Reaktiongase 1 oder 2 Brüdenrohre (17) vorgesehen sind, die mittels eines Konus mit einem Oberflächenverhältnis von 2 bis 3:1 angeschlossen sind.

18. Reaktorvorrichtung nach Anspruch 17,
**dadurch gekennzeichnet, dass** die Brüdenrohre (17) in einem Winkel von 0 bis 30° aus der vertikalen Behälterachse angeordnet sind.

19. Verwendung einer Reaktorvorrichtung nach mindestens einem der Ansprüche 1 bis 18 zur Polykondensation von Polymeren, insbesondere für Polyester.

20. Verwendung nach Anspruch 19, **dadurch gekennzeichnet, dass** die Vorrichtung als Endreaktor verwendet wird.

## Claims

1. Reactor device (25) for flowable media, in particular for polymers for the polycondensation of polyesters, having a rotor which rotates in a reactor housing (1), which has an inlet and an outlet (31, 32), and is mounted horizontally via a mounting device (4) by means of stub shaft arrangements which extend beyond the end walls of the reactor housing (1) and in that annular film-forming elements (8) are disposed on the rotor and strippers are disposed between the annular film-forming elements (8) on the inner faces of the reactor housing,
**characterised in that** the cylindrical rotor has an at least partially heatable/coolable portion, a heatable/coolable portion being provided in the direction of the outlet (32) and an unheated portion in the direction of the inlet (31) and the unheated portion of the cylindrical rotor being configured as a perforated basket frame (6) and the heatable/ coolable portion as a closed frame (7).

2. Reactor device according to claim 1,
**characterised in that** the ratio of perforated frame diameter to the reaction chamber diameter is between 0.5 and 0.6 and the ratio of the closed frame to the reaction chamber is 0.65 to 0.75.

3. Reactor device according to claim 1 or 2,
**characterised in that** the L/D ratio (length ratio (L) to the diameter ratio (D)) of the reaction chamber is 1 to 3.5, preferably 1.5 to 3.0, particularly preferred 2.5 to 3.

4. Reactor device according to at least one of the claims 1 to 3,
**characterised in that** the closed frame (7) has a heatable/coolable double jacket (23).

5. Reactor device according to at least one of the claims 1 to 4,
**characterised in that** the transition from the perforated basket frame (6) to the closed frame (7) is configured as a cone (22).

6. Reactor device according to at least one of the claims 1 to 5,
**characterised in that** one to two thirds of the horizontally disposed rotor, with respect to the horizontal extension, is formed by the heatable/coolable portion which is disposed on the outlet side.

7. Reactor device according to at least one of the claims 1 to 6,
**characterised in that** the strippers (11) are disposed only in the unheated portion and conveyer strippers (13) in the heatable/ coolable portion.

8. Reactor device according to claim 7,
**characterised in that** the conveyer strippers (13) are disposed radially offset relative to the strippers (11) which are disposed in the region of the unheated portion.

9. Reactor device according to claim 7 or 8,
**characterised in that** counter-strippers (14) are provided in the region of the heatable/coolable portion opposite the conveyer stripper (13).

10. Reactor device according to at least one of the claims 7 to 9,
**characterised in that** the conveyer strippers (13) and/or the counter-strippers (14) have a triangular configuration.

11. Reactor device according to at least one of the claims 1 to 10,
**characterised in that** the annular film-forming elements (8) are formed by a tubular crown (28) and a net-like metallic pipe structure (12) which is clamped between the tubular crown (28) and the rotor surface.

12. Reactor device according to claim 11,
**characterised in that** the net-like metallic structure forms lozenge-shaped and/or triangular openings.

13. Reactor device according to at least one of the claims 1 to 11,
**characterised in that** the discharge pump (19) is disposed directly on the reactor housing (1).

14. Reactor device according to at least one of the claims 1 to 13,
**characterised in that** the reactor housing (1) has a heatable double jacket (2).

15. Reactor device according to at least one of the claims 1 to 14,
**characterised in that** an end cover displacer (16) is provided at the outlet-side end of the closed frame (7).

16. Reactor device according to at least one of the claims 1 to 15,
**characterised in that** a seal (21) which comprises resilient blades is provided between the housing end cover (5) and the heatable/coolable basket frame (7) with inert gas purging.

17. Reactor device according to at least one of the claims 1 to 16,
**characterised in that** 1 or 2 vapour pipes (17) are provided for the reaction gases and are connected by means of a cone at a surface ratio of 2 to 3 : 1.

18. Reactor device according to claim 17,
**characterised in that** the vapour pipes (17) are disposed at an angle of 0 to 30° out of the vertical container axis.

19. Use of a reactor device according to at least one of the claims 1 to 18 for the polycondensation of polymers, in particular for polyesters.

20. Use according to claim 19,
**characterised in that** the device is used as an end reactor.

## Revendications

1. Dispositif de réaction (25) pour milieux fluides, en particulier pour polymères, destiné à la polycondensation de polyesters, comprenant un rotor tournant dans un boîtier de réacteur (1) présentant une entrée et une sortie (31, 32), lequel rotor est monté à l'horizontale sur un dispositif de paliers (4) au moyen d'agencements d'arbres courts s'étendant au -delà des parois frontales du boîtier de réacteur (1) et dans lequel des éléments annulaires filmogènes (8) sont aménagés sur le rotor et des racles sont disposées entre les éléments annulaires filmogènes (8) sur les surfaces internes du boîtier de réacteur,
**caractérisé en ce que** le rotor de forme cylindrique présente une section au moins en partie chauffable/refroidissable, dans lequel il est prévu une section chauffable/refroidissable dans la direction de la sortie (32) et une section non chauffée dans la direction de l'entrée (31) et la section non chauffée du rotor de forme cylindrique se présente sous la forme d'un corps perforé en tamis (6), tandis que la section chauffable/refroidissable est conformée en corps fermé (7).

2. Dispositif de réaction selon la revendication 1,
**caractérisé en ce que** le rapport du diamètre du corps perforé en tamis au diamètre de l'espace réactionnel est compris entre 0,5 et 0,6 et le rapport du corps fermé à l'espace réactionnel est de 0,65 à 0,75.

3. Dispositif de réaction selon la revendication 1 ou 2,
**caractérisé en ce que** le rapport L/D (rapport des longueurs (L) au rapport des diamètres (D)) de l'espace réactionnel est de 1 à 3,5, de préférence de 1,5 à 3,0, mieux encore de 2,5 à 3.

4. Dispositif de réaction selon au moins l'une quelconque des revendications 1 à 3,
**caractérisé en ce que** le corps fermé (7) présente une double enveloppe chauffable/refroidissable (23).

5. Dispositif de réaction selon au moins l'une quelconque des revendications 1 à 4,
**caractérisé en ce que** la transition du corps perforé en tamis (6) au corps fermé (7) se présente sous la forme d'un cône (22).

6. Dispositif de réaction selon au moins l'une quelconque des revendications 1 à 5,
**caractérisé en ce que**, par rapport à l'extension horizontale, un à deux tiers du rotor aménagé horizontalement est ou sont formés par la section chauffable/refroidissable aménagée côté sortie.

7. Dispositif de réaction selon au moins l'une quelconque des revendications 1 à 6,
**caractérisé en ce que** les racles (11) ne sont aménagées que dans la section non chauffée et des racles de transport (13) dans la section chauffable/refroidissable.

8. Dispositif de réaction selon la revendication 7,
**caractérisé en ce que** les racles de transport (13) sont agencées décalées radialement des racles (11) aménagées dans la zone de la section non chauffée.

9. Dispositif de réaction selon la revendication 7 ou 8,
**caractérisé en ce qu'**il est prévu, dans la zone de la section chauffable/refroidissable, des contre-racles (14) opposés aux racles de transport (13).

10. Dispositif de réaction selon au moins l'une quelconque des revendications 7 à 9,
**caractérisé en ce que** les racles de transport (13) et/ou les contre-racles (14) se présentent sous une forme triangulaire.

11. Dispositif de réaction selon au moins l'une quelconque des revendications 1 à 10,
**caractérisé en ce que** les éléments annulaires filmogènes (8) sont formés par une couronne tubulaire (28) et une structure tubulaire métallique réticulée (12) appliquée entre la couronne tubulaire (28) et la surface du rotor.

12. Dispositif de réaction selon la revendication 11,
**caractérisé en ce que** la structure métallique réticulée forme des ouvertures en forme de losange et/ou de triangle.

13. Dispositif de réaction selon au moins l'une quelconque des revendications 1 à 11,
**caractérisé en ce que** la pompe d'extraction (19) est aménagée directement sur le boîtier de réacteur (1).

14. Dispositif de réaction selon au moins l'une quelconque des revendications 1 à 13,
**caractérisé en ce que** le boîtier de réacteur (1) présente une double enveloppe chauffable (2).

15. Dispositif de réaction selon au moins l'une quelconque des revendications 1 à 14,
**caractérisé en ce qu'**il est prévu, à l'extrémité côté sortie du corps fermé (7), un organe de refoulement (16) dans le couvercle d'extrémité.

16. Dispositif de réaction selon au moins l'une quelconque des revendications 1 à 15,
**caractérisé en ce qu'**il est prévu un joint d'étanchéité (21) constitué de lamelles élastiques avec rinçage des gaz inertes situé entre le couvercle d'extrémité (5) du boîtier et le corps en tamis chauffable/refroidissable (7).

17. Dispositif de réaction selon au moins l'une quelconque des revendications 1 à 16,
**caractérisé en ce qu'**il est prévu, pour les gaz réactionnels, 1 ou 2 tubes à fumées (17) qui est ou sont raccordés au moyen d'un cône avec un rapport de surfaces de 2 à 3:1.

18. Dispositif de réaction selon la revendication 17,
**caractérisé en ce que** les tubes à fumées (17) sont aménagés selon un angle de 0 à 30° par rapport à l'axe vertical du récipient

19. Utilisation d'un dispositif de réaction selon au moins l'une quelconque des revendications 1 à 18 pour la polycondensation de polymères, en particulier de polyesters.

20. Utilisation selon la revendication 19, **caractérisée en ce que** l'on utilise le dispositif comme réacteur final.
